# EUROPÄISCHE PATENTSCHRIFT

(11) **EP 3 072 392 B1**
(45) Veröffentlichungstag und Bekanntmachung des Hinweises auf die Patenterteilung: **19.09.2018**
(21) Anmeldenummer: 16000719.1
(22) Anmeldetag: 25.03.2016
(51) Int. Cl.: A01K 51/00

(54) **VERFAHREN ZUR REDUZIERUNG VON VARROAMILBEN IN BIENENBEUTEN UND BIENENBEUTE MIT VORRICHTUNG ZUR BEKÄMPFUNG VON VARROAMILBEN**
METHOD FOR REDUCING VARROA MITES IN BEE HIVES AND BEE HIVE WITH A DEVICE FOR COUNTERACTING VARROA MITES
PROCÉDÉ DE REDUCTION DE LA VARROASE DANS LES RUCHES ET RUCHES COMPRENANT UN DISPOSITIF DE LUTTE CONTRE LA VARROASE

(30) Priorität: 27.03.2015 DE 102015004023
(43) Veröffentlichungstag der Anmeldung: 28.09.2016
(73) Patentinhaber: Riedmayer, Martin, 83043 Bad Aibling (DE)
(72) Erfinder: Riedmayer, Martin, 83043 Bad Aibling (DE); Thür, Christian, 83607 Holzkirchen (DE)

(56) Entgegenhaltungen:
- EP-A1- 2 474 224
- WO-A1-02/43475
- WO-A1-92/14355
- US-A1- 2008 064 298
- US-A1- 2012 202 403

## Beschreibung

Die vorliegende Erfindung betrifft Lösungen für das in der Imkerei weltweit bestehende Problem der Bekämpfung von Varroamilben in Bienenbeuten. Erscheinungsformen der aufgefundenen Lösungen sind ein erfindungsgemäße Verfahren, eine Bienenbeute mit einer Vorrichtung sowie die Verwendung dieser Vorrichtung bei einer Bienenbeute.

Als Bienenbeute ist jedwede künstliche Behausung für Bienenvölker zu verstehen, bei der in einer Gehäuseanordnung Wabenträger für Brut- und Honigwaben angeordnet sind. Übliche Bienenbeuten sind häufig als Magazinbeuten ausgeführt, mit wenigstens einer Zarge, in der nebeneinander Rahmen als Träger von Mittelwänden angeordnet sind. Auf den Mittelwänden werden die Waben gebildet. Die mit der Erfindung aufgefundenen Lösungen sind bei Magazinbeuten, aber darüber hinaus auch bei Bienenbehausungen anderer Art mit Wabenträgern anwendbar.

Die Varroamilbe stellt die weltweit größte existentielle Bedrohung für Bienen dar. Sie hält sich innerhalb der Bienenbeute - abhängig von der Jahreszeit, den klimatischen Bedingungen und der Brutaktivität im Bienenvolk - an unterschiedlichen Orten auf: während des Frühjahrs (in Mitteleuropa und in vergleichbaren Klimazonen) befinden sich ca. 80%, im Sommer etwa 70% und im Herbst ca. 60% der Milben in den Waben der Bienenbrut, die sich aufteilt in Drohnenbrut und Arbeiterinnenbrut. Die restlichen Milben sitzen auf den Bienen auf. Verdeutlicht ist das mit der nachfolgenden Tabelle.

| Jahreszeit | Aufenthalt in % der Gesamtpopulation der Milben | | | |
|---|---|---|---|---|
| | in der | | Summe Brut | auf den Bienen |
| | Drohnenbrut | Arbeiterinnenbrut | | |
| Frühjahr | 25% | 55% | 80% | 20% |
| Sommer | 20% | 50% | 70% | 30% |
| Herbst | 0% | 60% | 60% | 40% |

Innerhalb eines Bienenvolkes ist der Anteil der Drohnenbrut ca. 10% der Gesamtpopulation. Dies bedeutet, dass bei einem Aufenthalt von 25% der Milben in der Drohnenbrut eine relativ betrachtet wesentlich höhere Belastung der Drohnenbrut mit Milben vorliegt. Der Grund hierfür liegt in der längeren Brutphase der Drohnen von 23 Tagen (im Vergleich zur Arbeiterinnenbrut mit 21 Tagen). Dadurch ist für die Milben in der Drohnenbrut eine bessere (weil längere) Entwicklung gewährleistet. Grundsätzlich bevorzugen Milben die Drohnenbrut zur Fortpflanzung. Nachdem die Drohnenbrut aber lediglich 10% der Gesamtbienenpopulation beträgt, befindet sich die überwiegende Anzahl der Milben in der Arbeiterinnenbrut.

Die Milben nützen zur Fortbewegung bevorzugt die Ammenbienen, da diese mit der Brutpflege beschäftigt sind. Stellt die Milbe fest, dass gerade eine Wabe passiert wird, in der die Verdeckelung bevorsteht - wissenschaftliche Ergebnisse zeigen, dass die Milbe diesen Zeitpunkt durch Erkennung spezifischer atmosphärischer Parameter feststellt - lässt sich die Milbe von der Biene in die Wabe fallen. Anschließend bewegt sich die Milbe zum Wabenboden, wo sich der Futtersaft befindet, um sich dort zu verstecken. Die Bienenlarve hat den Futtersaft wenige Stunden nach dem Verdeckeln aufgebraucht. Die Milbe sticht die Bienenlarve an und saugt deren Hämolymphe. Bei diesem Vorgang werden bereits Krankheiten auf die Bienenlarve übertragen.

Am zweiten/dritten Verweiltag der Milbe in der Wabe legt diese ein Ei, aus dem das adulte Männchen entsteht. Vom vierten bis zum achten Tag werden weitere Eier gelegt, aus denen sich die weiblichen Milben entwickeln. Ab dem 10./11. Tag findet zunächst eine Paarung zwischen dem Männchen und dem ersten Weibchen und in der Folge mit den anderen Weibchen, deren Eier ab dem vierten bis zum achten Tag gelegt wurden, statt.

In der Arbeiterinnenbrut entwickeln sich ca. 1,4 befruchtete, in der Drohnenbrut ca. 2,4 Milbenweibchen. Beim Schlüpfen der Biene sterben das Milbenmännchen und nicht befruchtete Weibchen ab. Die befruchteten Milbenweibchen, sowie die Muttermilbe leben weiter (Muttermilbe erreicht ca. 3-4 Vermehrungszyklen).

Die Folgen des Befalls eines Bienenvolkes mit Varroamilben sind gravierend: durch den Aufenthalt der Milben innerhalb der Bruträume (Waben) wird die ungeborene Bienenbrut schwer geschädigt, die Reproduktionsrate im Bienenvolk wird reduziert und damit in der Folge die Generationenfolge im Bienenvolk gestört. Weiterhin entstehen Verhaltensänderungen bei den Bienen und damit Ausfall dieser Bienen im Volk für ihre Aufgaben. Generell verringern sich Lebensdauer der Bienen und deren Honigsammelleistung. Diese schwerwiegenden Folgen des Einwirkens der Varroamilbe auf das Bienenvolk führen dazu, dass ohne behandelnden menschlichen Eingriff die Bienenvölker alleine nicht überlebensfähig sind. Neben den geschilderten Schädigungen des Bienenvolks selbst sind die wirtschaftlichen Folgen für die Imkerei und darüber hinaus die volkswirtschaftlichen Folgen einer die Population bedrohenden Erkrankung beträchtlich, wie etwa Rückgang der Bestäubungsleistung im gesamten Pflanzenbereich, vor allem aber bei Obstpflanzen.

Bisher bekannte Behandlungskonzepte beruhen generell auf zwei unterschiedlichen Verfahren: einerseits Behandlung der Bienenvölker mit unterschiedlichen Säuren und Duftstoffen und andererseits mit thermischen Verfahren.

Grundsätzliches Problem der Säurebehandlungen ist, dass diese nur zu bestimmten Zeiten einsetzbar sind, um die Belastung des geernteten Honigs mit diesen Stoffen auszuschließen. Durch die Dauer dieser Phase der Nichtbehandlung der Völker gegen die Varroamilben kann sich deren Population stark vermehren und in dieser Zeit bereits das Bienenvolk stark schädigen, was bis zum Absterben des Volkes in der Brutphase führen kann. Ein weiterer gravierender Nachteil dieser Verfahren liegt darin, dass bestimmte Umgebungsbedingungen für deren wirksamen Einsatz vorherrschen müssen, wie etwa die richtige Temperatur und Luftfeuchte, um das Verdunsten der Wirkstoffe in wirksamer Konzentration zu gewährleisten. Wird bei der Erfolgskontrolle (Zählen der Milben) festgestellt, dass diese Maßnahmen nicht ausreichende Wirkung erzielt haben, werden die Möglichkeiten der Behandlung mit fortschreitender Jahreszeit weniger und die Belastungen des Bienenvolks steigen durch die Maßnahmen der Milbenbekämpfung.

Bei den thermischen Verfahren zur Reduzierung der Varroamilben sind grundsätzlich zwei verschiedene Verfahren bekannt: ein Teil der thermischen Verfahren basiert darauf, dass die Varroamilben temperaturempfindlich sind. Werden Temperaturen von ca. 36 bis 43° C erreicht, werden Eiweißbestandteile der Milbe geschädigt, wodurch diese in der Folge abstirbt. Die Bienen und deren Brut nehmen bei diesen Temperaturen keinen Schaden.

Diese Verfahren basieren entweder auf dem Einbringen von erwärmter, teilweise befeuchteter Luft in die Beute oder aber Entnahme der verdeckelten Brut und Verbringen in eine Box, in der die zur Schädigung der Varroamilben optimalen Klimabedingungen erzeugt werden. Problematisch bei den Verfahren, die erwärmte Luft in die Bienenbeute einbringen ist: deren Wirkung hängt ganz entscheidend von den Umgebungsbedingungen (Temperatur) ab; der Effekt auf die Milben innerhalb der Brut tritt durch verschiedene Isolationseffekte deutlich zeitverzögert auf, was eine lange Behandlungsdauer erfordert; die Messung der Temperatur, die erreicht ist, ist nicht repräsentativ für alle Bereiche im Bienenstock, vor allem nicht dort, wo die Milben sitzen (in den Brutzellen), womit entweder der Behandlungserfolg in Frage gestellt oder durch eine lange Einwirkdauer das Bienenvolk belastet würde. Jene Verfahren, bei denen die verdeckelte Brut aus der Bienenbeute entnommen und in einer Klimabox erwärmt wird, haben zwar einen besser kontrollierten Prozess und auch die Messung der Temperatur durch eine in der Brut befindliche Temperatursonde ist genauer, jedoch zeigen auch diese Verfahren erhebliche Nachteile: sie erfordern die Entnahme der Bienen und der Brut aus der Beute, was jahreszeitlich wegen niedriger Außentemperaturen problematisch sein kann. Aus diesem Grund wird die Brut sofort nach Entnahme in eine Transportbox mit warmer Luft verbracht. Das Verfahren kann nur bei Außentemperaturen > 18° C angewendet werden. Die Entnahme ist sehr arbeitsintensiv (z.B. Abkehren der Bienen von den Brutrahmen). In Kombination mit den Behandlungszeiten, die mehrere Stunden dauern, erfordert diese Behandlungsmethode einen hohen zeitlichen Aufwand

Ein weitere Variante der thermischen Verfahren zur Varroabehandlung geht von der Überlegung aus, dass die Drohnenbrut (relativ) stärker mit Milben belastet ist und stets ausreichend Drohnen im Volk vorhanden sind, so dass die Varroamilben im Drohnenrahmen (1 Rahmen von ca. 10 Rahmen einer Brutzarge) durch Überhitzung vernichtet werden können. Dieses Verfahren wird mit der Patentanmeldung WO 2012/108857 A1 als auch in US 2012/202403 A1 beschrieben. Nachteilig dabei ist, dass ausschließlich die Drohnenbrut behandelt wird. Nachdem sich der wesentlich größere Teil der in der Brut insgesamt befindlichen Milben in der Arbeiterinnenbrut befindet, kann mit diesem Verfahren die Gesamtbelastung des Bienenvolkes mit Varroamilben nicht ausreichend abgesenkt werden. In der Imkerschaft ist die Tatsache lange bekannt, dass die Drohnenbrut (relativ) stärker belastet ist als die Arbeiterinnenbrut, weshalb die Imker den gleichen Effekt der Reduzierung der Drohnenbrut (und damit der Milben) durch Ausschneiden der Drohnenbrutwaben erreichen. Das vorliegende Verfahren der Erhitzung und Vernichtung der Drohnenbrut weist keinen Vorteil gegenüber dem Drohnenschnitt auf. Imker, die diese Maßnahme durchführen, müssen trotzdem mit den bekannten Mitteln der Säurebehandlung oder mit Duftstoffen gegen die Varroa - Belastung in ihren Bienenvölkern vorgehen.

Die durch Varroamilben verursachte Schadensschwelle liegt bei einer Anzahl von 1000 Milben / Volk. Bei mehr als 1000 Milben wird das Bienenvolk den folgenden Winter nicht überleben. Die Milbenpopulation entwickelt sich, bei einer unterstellten Anzahl von 100 Milben zu Beginn der Brutphase im Februar, in einem unbehandelten Bienenvolk etwa wie folgt:

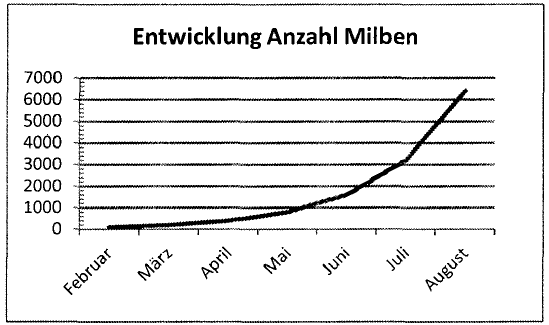

Die Drohnenbrutentnahme vermag die Entwicklung der Anzahl der Milben zwar zu dämpfen, schafft aber keine nachhaltige Wirkung:

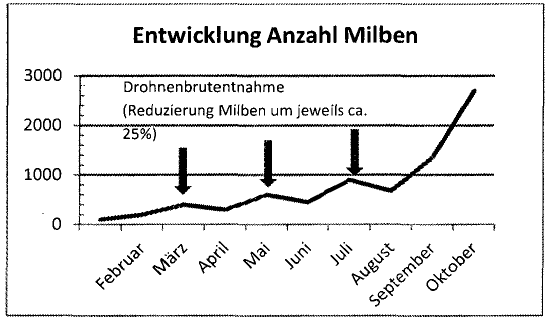

Der vorliegenden Erfindung liegt die Aufgabe zugrunde, ein gegenüber den bekannten Methoden wesentlich verbessertes Verfahren zur nachhaltigen Bekämpfung von Varroamilben aufzufinden, das bei Bienenbeuten beliebiger Art einsetzbar ist. Ferner soll eine für die Ausführung dieses Verfahrens optimal ausgestaltete Bienenbeute angegeben werden.

Diese Aufgabe wird im Hinblick auf die Vorgehensweise gelöst mit einem die Merkmale des Patentanspruchs 1 aufweisenden Verfahren zur Reduzierung von Varroamilben in einer aus räumlich voneinander getrennt in einer Gehäuseanordnung untergebrachten, im wesentlichen flächigen Wabenträgern für Brutwaben, einerseits, und Honigwaben, andererseits, aufgebauten Bienenbeute, bei welchem mittels jedem der Brutwabenträger zugeordneten elektrischen Heizeinrichtungen eine Aufheizung von Wabenträgern bis zu einer Zieltemperatur in den Waben der Drohnen- und der Arbeiterinnenbrut erfolgt, bei der in diesen angesiedelte Varroamilben abgetötet, die Bienenbrut aber im wesentlichen nicht beeinträchtigt wird, wobei während des Aufheizens die Temperatur der Wabenträger über eine Vielzahl von jedem Brutwabenträger zugeordneten, in gitterartiger Anordnung über den gesamten Wabenträger verteilten Sensoren erfasst wird, deren Sensorsignale einer Steuer- und Regeleinrichtung zugeleitet werden, die bewirkt, dass die Zieltemperatur auf dem jeweiligen Wabenträger über eine bestimmte Zeitdauer im wesentlichen homogen gehalten wird und danach die Heizeinrichtungen ausgeschaltet werden.

Die Patentansprüche 2 bis 4 betreffen vorteilhafte weitere Ausgestaltungen des erfindungsgemäßen Verfahrens.

Bezüglich einer optimal ausgestalteten Bienenbehausung wird die gestellte Aufgabe entsprechend den Merkmalen des Patentanspruchs 5 gelöst durch eine Bienenbeute mit in einer Gehäuseanordnung räumlich voneinander getrennt untergebrachten flächigen Wabenträgern für Brutwaben, einerseits, und Honigwaben, andererseits, und einer Vorrichtung zur Reduzierung von Varroamilben, wobei diese Vorrichtung eine jedem Brutwabenträger zugeordnete elektrische Heizeinrichtung und eine jedem Brutwabenträger zugeordnete Vielzahl von in gitterartiger Anordnung über den gesamten Wabenträger verteilten Temperatursensoren umfasst, und eine die Temperatursignale verarbeitende und die Energiezufuhr zu den Heizeinrichtungen steuernde Steuer- und Regeleinrichtung aufweist, derart, dass die Brutwabenträger bis zu einer Zieltemperatur in den Waben der Drohnenbrut und der Arbeiterinnenbrut, bei der in diesen angesiedelte Varroamilben abgetötet, die Bienenbrut aber im wesentlichen nicht beeinträchtigt wird, aufheizbar sind, und die Heizeinrichtungen nach einer vorbestimmten Zeit, in der die Zieltemperatur gehalten wird, abschaltbar sind, wobei
- die Steuer- und Regeleinrichtung manuell einschaltbar ist, und mit dem Einschalten ein Ablauf der geregelten, zeitgesteuerten Wärmebehandlung gestartet und automatisiert ausführbar ist, oder
- die Einstellbarkeit der Steuer- und Regeleinrichtung derart vorgesehen ist, dass nach dem Einschalten der Vorrichtung ein wählbarer Zyklus von sich, insbesondere täglich, wöchentlich oder monatlich, wiederholenden Wärmebehandlungen zur Abtötung von Varroamilben automatisiert ausführbar ist.

Die Patentansprüche 6 bis 15 betreffen vorteilhafte weitere Ausgestaltungen der erfindungsgemäßen Bienenbeute.

Das Besondere des erfindungsgemäßen Verfahrens liegt darin, dass zum einen im Gegensatz zu anderen bekannten Verfahren alle Brutwabenträger der Bienenbeute mit der für die Abtötung der Milben erforderlichen Temperatur beaufschlagbar sind; es wird also sowohl die Drohnenbrut als auch die Arbeiterinnenbrut erreicht. Zum anderen wird die Temperatur der Wabenträger in Abhängigkeit von den Signalen einer Vielzahl von flächig über den Wabenträger verteilten Temperatursensoren gesteuert und geregelt. Die Vielzahl der Sensoren bildet dabei ein Messgitter, das von der Steuer- und Regeleinrichtung abgefragt wird, wobei diese Steuer- und Regeleinrichtung in Abhängigkeit von dem Abfrageergebnis eine gezielte Abgabe von elektrischer Energie an die elektrischen Heizeirichtungen einleitet. Unter der "gitterartigen Anordnung" der Sensoren soll verstanden sein, dass diese über den gesamten Wabenträger in im Wesentlichen gleicher Flächendichte verteilt sind. In bestimmten, gleich großen Flächenbereichen sind also etwa gleich viele Sensoren vorgesehen. Dabei können die Sensoren, müssen aber nicht, ein geometrisch regelmäßiges Anordnungsmuster bilden, z.B. mit annähernd gleichen Abständen zueinander in Reihen und Spalten angeordnet. Das Zusammenwirken des so beschaffenen Messgitters mit der Steuer- und Regeleinrichtung ermöglicht eine besonders genaue Temperaturbeaufschlagung aller Flächenbereiche des Wabenträgers, insbesondere dann, wenn dessen Fläche in mehrere Heizzonen aufgeteilt ist (Anspruch 7), deren Energiezufuhr unabhängig voneinander steuerbar ist, so dass die Temperatur in der für die Abtötung der Milben notwendigen Höhe über die dazu erforderliche bestimmte Zeit homogen verteilt auf dem gesamten Wabenträger konstant gehalten werden kann.

Wissenschaftliche Erkenntnisse haben ergeben, dass in der Zeit, in der die Brutwaben verdeckelt werden, die Wabentemperatur einen sich in charakteristischer Weise erhöhenden zeitlichen Verlauf aufweist. Das kann bei der Erfindung ausgenutzt werden, indem in der Brutphase mittels des Messgitters und der Steuer- und Regeleinrichtung die Temperatur der unbeheizten Brutwabenträger wiederholt erfasst wird. Liegt der für die Verdeckelung der Waben sprechende charakteristische Temperaturverlauf vor, wird die zur Abtötung der Milben erforderliche Temperaturerhöhung eingeleitet und während der notwendigen Zeitdauer aufrecht erhalten. Mit dieser Verfahrensweise können, insbesondere auch automatisiert, gezielt bestimmte Wabenträger oder bestimmte Bereiche auf einzelnen Wabenträgern, in denen eine verdeckelte Brut vorhanden ist, ermittelt werden und die Wärmebehandlung kann auf diese Brutbereiche beschränkt werden, so dass nicht mehr Heizenergie als erforderlich aufgewendet zu werden braucht.

Die Wärmebehandlung zur Abtötung der Varroamilben kann zur Erzielung eines nachhaltigen Ergebnisses in zeitlicher Wiederholung, insbesondere täglich, wöchentlich oder monatlich erfolgen.

Alle Verfahrensschritte für die Temperaturerfassung, die Einleitung des Aufheizens, das Halten der Zieltemperatur, das Ausschalten der Heizeinrichtungen und ggf. die Wiederholung der Wärmebehandlung können automatisiert ausgeführt werden.

Zur Überwachung und genaueren Auswertung der Zustandsparameter der Bienenbeute können in zeitlicher Wiederholung automatisiert mittels der Temperatursensoren erfasste Temperaturwerte und/oder mittels geeigneter Zusatzeinrichtungen erfasste weitere Daten, wie das Gewicht der Bienenbeute, die Zeiten und Zeitdauern der Wärmebehandlungen oder Witterungsaufzeichnungen, gespeichert werden. Dabei können die erfassten Daten fernübertragen werden, insbesondere nach den Standards von Bluetooth, W-LAN oder GSM.

Alle ausgeführten Verfahrensschritte und/oder Einstellungen von maßgeblichen Verfahrensparametern, wie Zeitdauern oder Temperaturwerten können ferngesteuert ausgelöst, bzw. vorgenommen werden.

Es hat sich gezeigt, dass das erfindungsgemäße Verfahren zur Bekämpfung von Varroamilben in Bienenbeuten allen bekannten Methoden ganz erheblich überlegen ist. Das zeigt besonders deutlich das nachfolgende Diagramm zur Entwicklung der Milbenanzahl in einer Bienenbeute, die - hier monatlich - dem neuen Verfahren folgend behandelt worden ist:

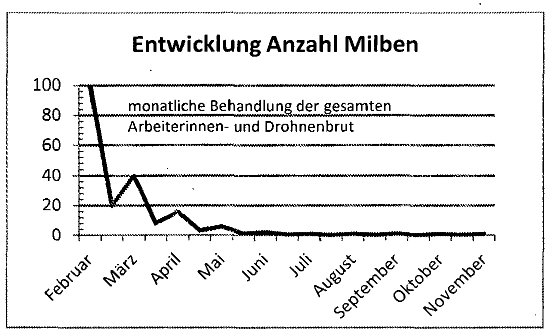

Hervorzuheben ist, dass auch die auf den Bienen aufsitzenden Milben vom Behandlungserfolg erfasst werden, da diese Milben an die Brutwaben abgegeben und dort laufend vernichtet werden.

Zur Lösung der der Erfindung zugrunde gelegten Aufgabe, betreffend die optimale Ausstattung der Bienenbehausung, ist eine Bienenbeute mit den im Patentanspruch 10 angegebenen Merkmalen vorgesehen. Das Besondere ist dabei, wie bereits für das erfindungsgemäße Verfahren hervorgehoben, wiederum, dass allen Brutwabenträgern, also sowohl denen mit Drohnenbrut, als auch denen mit Arbeiterinnenbrut, elektrische Heizeinrichtungen und Messgitter aus Temperatursensoren zugeordnet sind, die mit einer Steuer- und Regeleinrichtung zusammenwirken. Darüber hinaus weist die erfindungsgemäße Bienenbeute Vorrichtungskomponenten auf, die erforderlich sind, um das Verfahren mit den Besonderheiten der Patentansprüche 1 bis 9 ausführen zu können.

Die Steuer- und Regeleinrichtung kann dazu ausgebildet sein, manuell einschaltbar zu sein, wobei dann mit dem Einschalten ein Ablauf der geregelten, zeitgesteuerten Wärmebehandlung gestartet wird und automatisiert ausführbar ist.

Die Einstellbarkeit der Steuer- und Regeleinrichtung kann aber auch derart vorgesehen sein, dass nach dem Einschalten der aus den Messgittern, den Heizeinrichtungen und der Steuer- und Regeleinrichtung gebildeten Vorrichtung ein wählbarer Zyklus von sich, insbesondere täglich, wöchentlich oder monatlich, wiederholenden Wärmebehandlungen zur Abtötung von Varroamilben automatisiert ausführbar ist.

Die Bienenbeute kann als Magazinbeute mit wenigstens einer Zarge und darin angeordneten Rahmen aufgebaut sein, in denen Mittelwände als Wabenträger befestigt sind. Dabei können die als Brutwabenträger vorgesehenen Mittelwände aus Kunststoff gefertigt sind, mit an den Oberflächen ausgeformten Wabenansätzen, und die Heizeinrichtungen können in den Kunststoff eingebettete Heizleiter sein, insbesondere aus Kupfer.

Alternativ dazu können die als Brutwabenträger vorgesehenen Mittelwände glatte, mit Wachs beschichtete Kunststofffolien sein, mit in den Folien eingebetteten oder auf den Kunststoff der Folien aufgebrachten Heizleitern, insbesondere aus Kupfer. Dabei kann die Wachsschicht mit darin applizierten Wabenstrukturen ausgebildet sein.

Mit Vorteil können die Heizeinrichtungen für die als Brutwabenträger vorgesehenen Mittelwände in Heizzonen aufgeteilt sein, deren Energiezufuhr mittels der Steuer- und Regeleinrichtung unabhängig voneinander steuerbar ist. Das ermöglicht, die Temperaturverteilung über die gesamte Fläche des Wabenträgers homogen zu halten.

Es kann vorgesehen sein, dass die Mittelwände mehrschichtig aufgebaut sind, derart, dass auf eine elektrisch isolierende Mittelschicht beidseitig Kunststoffschichten folgen, denen jeweils eine elektrische Heizeinrichtung und in gitterartiger Anordnung über die Fläche verteilte Temperatursensoren zugeordnet sind. Insbesondere können die Heizeinrichtungen und die Temperatursensoren beidseitig auf der isolierenden Mittelschicht angeordnet sein und die Anordnung aus Mittelschicht, Heizeinrichtungen und Temperatursensoren kann beidseitig mit einer Lackschicht überzogen sein.

Bei einer aus Zargen gebildeten Magazinbeute kann an einer Außenwand einer der Zargen mit neben einander angeordneten Brutwabenträgern eine wetterfest ausgebildete Aufnahme für die den Heizeinrichtungen und den Temperatursensoren der Mittelwände der Brutzarge zugeordnete Steuer- und Regeleinrichtung angeordnet sein, wobei in der Aufnahme auch eine Akkueinrichtung als Stromversorgung für die mit den Heizeinrichtungen, den Sensoren und der Steuer- und Regeleinrichtung gebildete Vorrichtung untergebracht sein kann. Da solche Bienenbeuten im Freien aufgestellt werden, ist es zweckmäßig, die Aufnahme gegen Diebstahl zu sichern und insbesondere abschließbar vorzusehen. Bei einer solchen Bienenbeute können Steckkontakte an den Rahmen und eine an die Steuer- und Regeleinrichtung anschließbare Kontaktkette aus Kunststoff vorgesehen sein, die aus aneinander klappbar befestigten Gliedern gebildet ist, welche mit den Steckkontakten an den Rahmen korrespondierende Kontakte tragen, derart, dass mittels der über die Rahmen gelegten Kontaktkette deren Kontakte mit den Steckkontakten an den Rahmen verbindbar sind, zur Herstellung aller Leitungsverbindungen zwischen der Steuer- und Regeleinrichtung, einerseits, und den mit den Steckkontakten an den Rahmen in Leitungsverbindung stehenden Heizeinrichtungen und Sensoren für die Mittelwände, andererseits.

Für eine Bienenbeute, die Teil einer Anordnung aus mehreren Bienenbeuten dieser Art ist, kann vorgesehen sein, anstelle der an einer Außenwand der betreffenden Zarge befestigten Aufnahme für die Steuer- und Regeleinrichtung eine wettergeschützte Steckverbindung anzuordnen, zum Herstellen einer Leitungsverbindung für diese Zarge zwischen deren mit Heizeinrichtungen und Temperatursensoren ausgebildeten Mittelwänden über Steckkontakte an den Rahmen und eine wie oben erwähnt ausgebildete Kontaktkette, einerseits, und einer zentralen Steuer- und Regeleinrichtung für alle Bienenbeuten der Anordnung, andererseits.

Erfindungsgemäß kann die als Magazinbeute ausgebildete Bienenbeute mit einem elektronischen Identifizierungsbaustein an jeder Zarge mit Brutwabenträgern, und an jedem Rahmen von Brutwabenträgern in dieser Zarge ausgestattet sein. Es kann die Auslesbarkeit der Identifizierungsmerkmale aus den Identifizierungsbausteinen zur Speicherung dieser Merkmale zusammen mit weiteren Zustands- und Statusdaten der betreffenden Zarge und der in ihr aufgenommenen Rahmen mittels der dafür ausgebildeten Steuer- und Regeleinrichtung vorgesehen sein.

Mit Vorteil können bei den zuvor beschriebenen Bienenbeuten die mit der Steuer- und Regeleinrichtung zusammenwirkenden Heizeinrichtungen zum Abschmelzen der Wachswaben auf den Wabenträgern durch Wärmezufuhr verwendet werden.

Nachfolgend wird die erfindungsgemäße Bienenbeute anhand der Zeichnung in Form von Ausführungsbeispielen weiter erläutert.

Es zeigen
Figur 1: einen Rahmen der Bienenbeute
Figur 2: eine Zarge einer Bienenbeute mit darin eingesetzten Rahmen
Figur 3: eine Anordnung aus mehreren Magazinbeuten mit Zargen

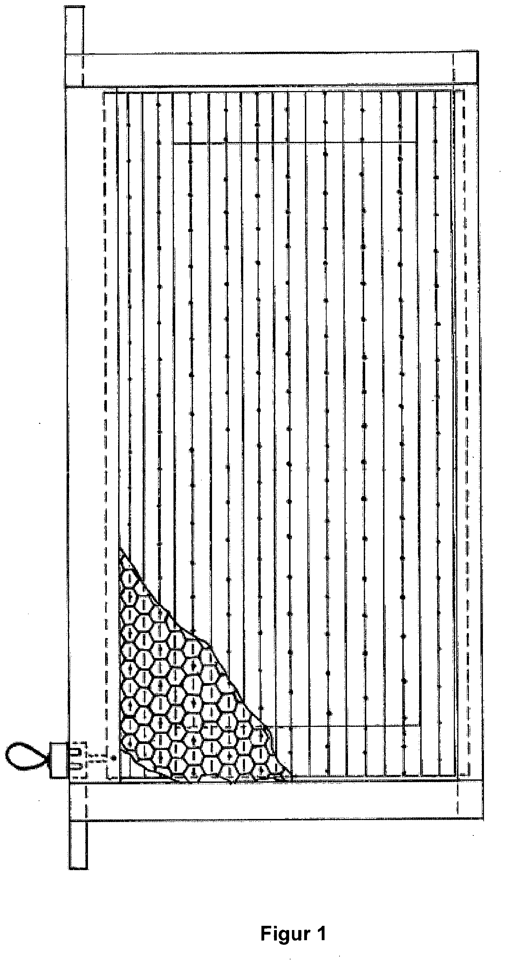

In Figur 1 ist ein Rahmen dargestellt, der in eine Zarge eingesetzt wird. In dem Rahmen ist eine Mittelwand als Wabenträger gehalten, in diesem Fall ein Träger für Brutwaben. Der Wabenträger besteht aus Kunststoff mit darin integrierten Heizleitern, z.B. Kupferbahnen. Damit ist eine Heizeinrichtung für die gezielte Erwärmung der beidseits auf dem Wabenträger angeordneten Brutwaben gebildet. Die Wabenstruktur ist unten im linken Bereich der Figur angedeutet. Mit einem eingezeichneten Rechteck ist die Begrenzung zwischen einer inneren und einer außerhalb des Rechtecks liegenden Heizzone dargestellt. Beide Heizzonen sind getrennt voneinander mit Heizenergie beaufschlagbar. Dies bietet die Möglichkeit, durch unterschiedliche Energiezufuhren zu den Heizzonen Temperaturunterschiede auszugleichen, bis sich eine homogene Temperaturverteilung auf der gesamten Fläche des Wabenträgers einstellt. Abweichend von dem gezeichneten Ausführungsbeispiel können mehr als zwei Heizzonen vorgesehen sein, woraus sich weiter verbesserte Möglichkeiten für den Temperaturausgleich ergeben. Mit Punkten in der Zeichnung sind Temperatursensoren angedeutet. Die Vielzahl der Sensoren bildet zusammen genommen ein Messgitter, dessen Sensorsignale in der nicht gezeigten Steuer- und Regeleinrichtung verarbeitet werden.

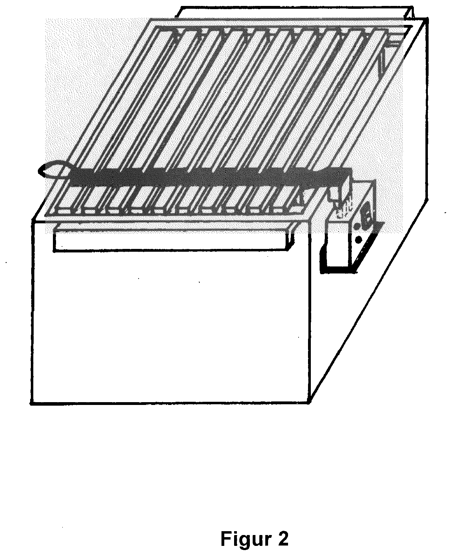

In Figur 2 ist eine Zarge einer Magazinbeute dargestellt. In die Zarge sind nebeneinander 10 Rahmen mit darin befestigten Brutwabenträgern eingesetzt. Die Rahmen tragen an ihren oberen Rahmenleisten Steckkontakte, die mit korrespondierenden Kontakten einer Kontaktkette aus Kunststoff zusammenwirken. Zum Montieren der Kette wird diese auf die Steckkontakte an den Rahmen aufgesteckt und, in der Figur rechts gezeigt, mit der Steuer- und Regeleinrichtung verbunden, die in einer Aufnahme außen an der Zarge aufgenommen ist. Zum Demontieren kann die Kontaktkette in einfacher Weise von den Steckkontakten abgezogen werden. Dazu trägt sie an einem Ende eine Abzugslasche. Zur Energieversorgung ist in der genannten Aufnahme auch noch ein Akkupack untergebracht. Die Steuer- und Regeleinrichtung ist so ausgebildet, dass sie nach manuellem Einschalten einen zeitgesteuerten und temperaturgeregelten Ablauf mit Beheizung der Wabenträger auslöst. Dadurch werden sämtliche Varroamilben in den verdeckelten Brutwaben der Drohnenbrut und der Arbeiterrinnenbrut abgetötet. Die Bienenbrut selbst wird nicht beeinträchtigt. Alternativ zur Handbetätigung ist die Steuer- und Regeleinrichtung so programmierbar dass sie nach Voreinstellung automatisiert wiederholte Aufheizvorgänge zu vorgegeben Zeiten und für vorbestimmte Dauer auslöst. Überdies kann die gesamte Anordnung auch fernsteuerbar sein, einschließlich der Möglichkeit, ferngesteuert Programmparameter für die gewünschten Heizzyklen zu ändern.

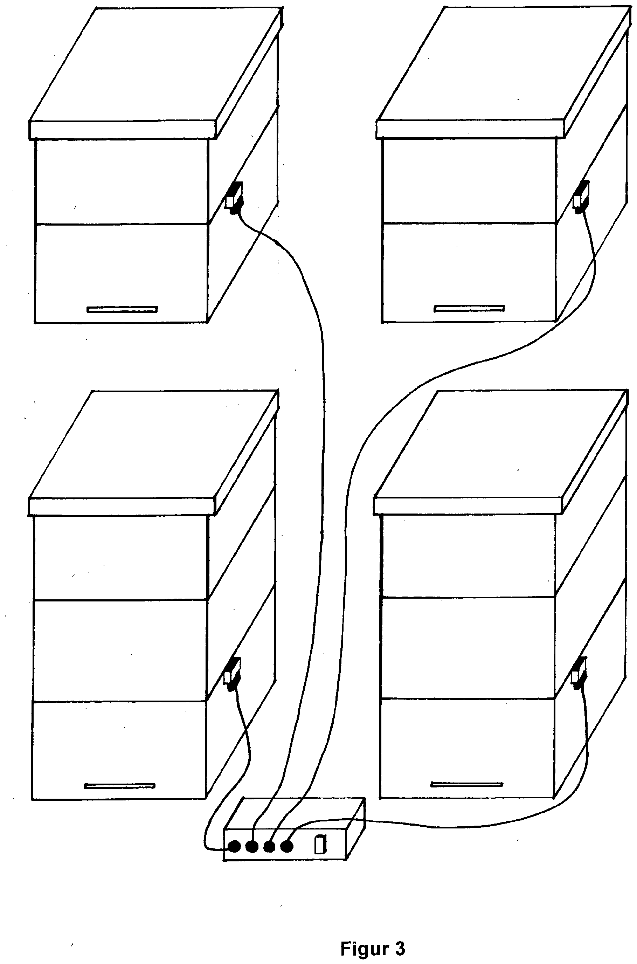

Figur 3 zeigt eine Anordnung aus mehreren Magazinbeuten, die jeweils aus zwei oder mehr Zargen gebildet sind. Jede Zarge nimmt eine Mehrzahl von Rahmen wie in Figur 2 gezeigt auf, in denen Wabenträger befestigt sind. Die jeweils untersten Zargen tragen die Brutrahmen, deren Wabenträgern jeweils Heizeinrichtungen und Messgitter mit einer Vielzahl von Temperatursensoren zugeordnet sind. An der Außenwand dieser Zargen sind wettergeschützte Steckverbindungen vorgesehen, die einerseits mit der im Zusammenhang mit Figur 2 erläuterten Kontaktkette, und andererseits mit einer zentral für alle Magazinbeuten gemeinsamen Steuer- und Regeleinrichtung zusammenwirken. Diese zentrale Steuer- und Regeleinrichtung ist zur Auslösung einzelner Aufheizvorgänge der Wabenträger sowohl handbetätigt auslösbar und startet dann einen Heizablauf zur Abtötung von Varroamilben, als auch programmierbar für den automatisierten Ablauf von einzelnen Heizabläufen oder auch Heizzyklen nach voreinstellbaren Regeln. Eine ferngesteuerte Einwirkung auf die zentrale Steuer- und Regeleinrichtung ist ebenfalls möglich.

Die hier erläuterte Erfindung stellt ein hoch wirksames Verfahren zur Reduzierung von Varroamilben in Bienenbeuten und eine entsprechende technische Ausstattung von Bienenbeuten für die Durchführung dieses Verfahrens zur Verfügung. Stichwortartig zusammengefasst ergeben sich aus der Erfindung insbesondere folgende Vorteile:
- Jederzeitige Anwendbarkeit der Temperaturbehandlung der Wabenträger, ohne bestimmte Voraussetzungen für das Klima, die Jahres- oder Tageszeit
- Bekämpfung aller in der Brut befindlichen Milben, sowohl in der Arbeiterinnen- als auch in der Drohnenbrut
- Behandlung möglichst nahe im Wirkort, nämlich dort, wo sich die Milben befinden (am Wabenboden)
- Geringe Störung und Belastung des Bienenvolkes, weil die Behandlung bei geschlossener Bienenbeute erfolgen kann
- Mehrere Temperaturzonen sowohl auf dem einzelnen Rahmen, als auf allen Brutrahmen, um eine maximal gleichmäßige Temperaturverteilung zu erreichen
- Keinerlei Folgebelastungen im geernteten Honig
- Individuelle Behandlungsfrequenz abhängig von der Belastung des Volkes (täglich, wöchentlich, monatlich)
- Kurze Behandlungsdauer durch geringe Distanz zwischen Wärmequelle und Milben
- Reduktion der Milbenpopulation auf ein Mindestmaß, bis gegen Null
- Denkbar ist eine Temperaturkontrolle und - aufzeichnung innerhalb der Beute (über die Temperatursensoren)
- Durch die Temperatursensoren wird es auch möglich, den Aufenthaltsort der Brut und der Bienen zu ermitteln/darzustellen
- Da es möglich ist, über die Temperatursensoren den Ort der Brut zu ermitteln, wird es auch möglich, gezielt nur diese Rahmen und Bereiche zu behandeln ("on demand" Energieeinsparung, geringstmögliche Beeinträchtigung der Brut).

## Patentansprüche

1. Verfahren zur Reduzierung von Varroamilben in einer aus räumlich voneinander getrennt in einer Gehäuseanordnung untergebrachten, im wesentlichen flächigen Wabenträgern für Brutwaben, einerseits, und Honigwaben, andererseits, aufgebauten Bienenbeute, bei welchem mittels jedem der Brutwabenträger zugeordneten elektrischen Heizeinrichtungen eine Aufheizung von Wabenträgern bis zu einer Zieltemperatur in den Waben der Drohnen- und der Arbeiterinnenbrut erfolgt, bei der in diesen angesiedelte Varroamilben abgetötet, die Bienenbrut aber im wesentlichen nicht beeinträchtigt wird, wobei während des Aufheizens die Temperatur der Wabenträger über eine Vielzahl von jedem Brutwabenträger zugeordneten, in gitterartiger Anordnung über den gesamten Wabenträger verteilten Sensoren erfasst wird, deren Sensorsignale einer Steuer- und Regeleinrichtung zugeleitet werden, die bewirkt, dass die Zieltemperatur auf dem jeweiligen Wabenträger über eine bestimmte Zeitdauer im wesentlichen homogen gehalten wird und danach die Heizeinrichtungen ausgeschaltet werden.

2. Verfahren nach Anspruch 1, bei dem in der Brutphase über die Sensoren die jeweilige Temperatur der unbeheizten Brutwabenträger erfasst wird, und bei dem nach der Feststellung von über die gesamte Ausdehnung oder in Teilbereichen von Brutwabenträgern gegebenen charakteristischen Temperaturwerten oder Temperaturverläufen, die auf die Verdeckelung von Brutwaben schließen lassen, die geregelte und zeitgesteuerte Wärmebehandlung zur Abtötung der Varroamilben in den Brutwaben erfolgt, wobei alle Brutwabenträger der geregelten und zeitgesteuerten Wärmebehandlung gleichzeitig unterzogen werden, oder die Wärmebehandlung selektiv nur auf diejenigen Brutwabenträger oder Bereiche von Brutwabenträgern beschränkt wird, in denen die auf eine Verdeckelung von Brutwaben hindeutende charakteristische Temperatur festgestellt worden ist.

3. Verfahren nach einem der Ansprüche 1 oder 2, bei dem die geregelte und zeitgesteuerte Wärmebehandlung zur Abtötung der Varroamilben über vorbestimmte Zeitabschnitte in zeitlicher Wiederholung, insbesondere täglich, wöchentlich oder monatlich, erfolgt, und alle Verfahrensschritte für die Temperaturerfassung, die Einleitung des Aufheizens, das Halten der Zieltemperatur, das Ausschalten der Heizeinrichtungen und ggf. die Wiederholung der Wärmebehandlung automatisiert ausgeführt werden.

4. Verfahren nach Anspruch 3, bei welchem die automatisiert ausgeführten Verfahrensschritte und/oder Einstellungen von maßgeblichen Verfahrensparametern, wie Zeitdauern oder Temperaturwerte, ferngesteuert ausgelöst, bzw. vorgenommen werden.

5. Bienenbeute, mit in einer Gehäuseanordnung räumlich voneinander getrennt untergebrachten flächigen Wabenträgern für Brutwaben, einerseits, und Honigwaben, andererseits, und einer Vorrichtung zur Reduzierung von Varroamilben, wobei diese Vorrichtung eine jedem Brutwabenträger zugeordnete elektrische Heizeinrichtung und eine jedem Brutwabenträger zugeordnete Vielzahl von in gitterartiger Anordnung über den gesamten Wabenträger verteilten Temperatursensoren umfasst, und eine die Temperatursignale verarbeitende und die Energiezufuhr zu den Heizeinrichtungen steuernde Steuer- und Regeleinrichtung aufweist, derart, dass die Brutwabenträger bis zu einer Zieltemperatur in den Waben der Drohnenbrut und der Arbeiterinnenbrut, bei der in diesen angesiedelte Varroamilben abgetötet, die Bienenbrut aber im wesentlichen nicht beeinträchtigt wird, aufheizbar sind, und die Heizeinrichtungen nach einer vorbestimmten Zeit, in der die Zieltemperatur gehalten wird, abschaltbar sind, wobei
- die Steuer- und Regeleinrichtung manuell einschaltbar ist, und mit dem Einschalten ein Ablauf der geregelten, zeitgesteuerten Wärmebehandlung gestartet und automatisiert ausführbar ist, oder
- die Einstellbarkeit der Steuer- und Regeleinrichtung derart vorgesehen ist, dass nach dem Einschalten der Vorrichtung ein wählbarer Zyklus von sich, insbesondere täglich, wöchentlich oder monatlich, wiederholenden Wärmebehandlungen zur Abtötung von Varroamilben automatisiert ausführbar ist.

6. Bienenbeute nach Anspruch 5, aufgebaut als Magazinbeute mit wenigstens einer Zarge und darin angeordneten Rahmen, in denen Mittelwände als Wabenträger befestigt sind, wobei die als Brutwabenträger vorgesehenen Mittelwände
- aus Kunststoff gefertigt sind, mit an den Oberflächen ausgeformten Wabenansätzen, und die Heizeinrichtungen in den Kunststoff eingebettete Heizleiter, insbesondere aus Kupfer, umfassen, oder
- glatte, mit Wachs beschichtete Kunststofffolien sind, mit in den Folien eingebetteten oder auf den Kunststoff der Folien aufgebrachten Heizleitern, insbesondere aus Kupfer, und die Wachsschicht mit darin applizierten Wabenstrukturen ausgebildet ist.

7. Bienenbeute nach Anspruch 6, bei der die Heizeinrichtungen für die als Brutwabenträger vorgesehenen Mittelwände in Heizzonen aufgeteilt sind, deren Energiezufuhr mittels der Steuer- und Regeleinrichtung unabhängig voneinander steuerbar ist.

8. Bienenbeute nach einem der Ansprüche 6 oder 7, wobei die Mittelwände mehrschichtig aufgebaut sind, derart, dass auf eine elektrisch isolierende Mittelschicht beidseitig Kunststoffschichten folgen, denen jeweils eine elektrische Heizeinrichtung und in gitterartiger Anordnung über die Fläche verteilte Temperatursensoren zugeordnet sind.

9. Bienenbeute nach Anspruch 8, wobei die Heizeinrichtungen und die Temperatursensoren beidseitig auf der isolierenden Mittelschicht angeordnet sind und die Anordnung aus Mittelschicht, Heizeinrichtungen und Temperatursensoren beidseitig mit einer Lackschicht überzogen ist.

10. Bienenbeute nach einem der Ansprüche 6 bis 9, wobei an einer Außenwand einer der Zargen mit neben einander angeordneten Brutwabenträgern eine wetterfest ausgebildete Aufnahme für die den Heizeinrichtungen und den Temperatursensoren der Mittelwände der Brutzarge zugeordnete Steuer- und Regeleinrichtung angeordnet ist.

11. Bienenbeute nach Anspruch 10, wobei in der Aufnahme auch eine Akkueinrichtung als Stromversorgung für die mit den Heizeinrichtungen, den Sensoren und der Steuer- und Regeleinrichtung gebildete Vorrichtung untergebracht ist.

12. Bienenbeute nach einem der Ansprüche 10 oder 11, mit Steckkontakten an den Rahmen und mit einer an die Steuer- und Regeleinrichtung anschließbaren Kontaktkette aus Kunststoff, die aus aneinander klappbar befestigten Gliedern gebildet ist, welche mit den Steckkontakten an den Rahmen korrespondierende Kontakte tragen, derart, dass mittels der über die Rahmen gelegten Kontaktkette deren Kontakte mit den Steckkontakten an den Rahmen verbindbar sind, zur Herstellung aller Leitungsverbindungen zwischen der Steuer- und Regeleinrichtung, einerseits, und den mit den Steckkontakten an den Rahmen in Leitungsverbindung stehenden Heizeinrichtungen und Sensoren für die Mittelwände, andererseits.

13. Bienenbeute nach Anspruch 12 als Teil einer Anordnung aus mehreren Bienenbeuten dieser Art, wobei anstelle der an einer Außenwand der betreffenden Zarge befestigten Aufnahme für die Steuer- und Regeleinrichtung eine wettergeschützte Steckverbindung vorgesehen ist, zum Herstellen einer Leitungsverbindung für diese Zarge zwischen deren mit Heizeinrichtungen und Temperatursensoren ausgebildeten Mittelwänden über Steckkontakte an den Rahmen und eine entsprechend Anspruch 12 ausgebildete Kontaktkette, einerseits, und einer zentralen Steuer- und Regeleinrichtung für alle Bienenbeuten der Anordnung, andererseits.

14. Bienenbeute nach einem der Ansprüche 6 bis 13, mit einem elektronischen Identifizierungsbaustein an jeder Zarge mit Brutwabenträgern und an jedem Rahmen von Brutwabenträgern in dieser Zarge.

15. Bienenbeute nach Anspruch 14, mit Auslesbarkeit der Identifizierungsmerkmale aus den Identifizierungsbausteinen zur Speicherung dieser Merkmale zusammen mit weiteren Zustands- und Statusdaten der betreffenden Zarge und der in ihr aufgenommenen Rahmen mittels der dafür ausgebildeten Steuer- und Regeleinrichtung.

## Claims

1. Process for reducing Varroa mites in a beehive built up from substantially flat honeycomb carriers for breeding combs on the one hand and honeycombs on the other hand, which are accommodated spatially separated from one another in a housing arrangement, in which the honeycomb carriers for breeding are heated by means of an electrical heating device assigned to each honeycomb carrier for breeding up to a target temperature in the combs of the drone and worker brood, in which Varroa mites settled therein are killed off, but the brood is not substantially impaired, the temperature of the honeycomb carriers for breeding being detected during heating via a plurality of sensors assigned to each honeycomb carrier and distributed in a grid-like arrangement over the entire honeycomb carrier for breed, the sensor signals of which are fed to a control and regulating device which causes the target temperature on the respective honeycomb carrier to be maintained substantially homogeneous over a certain period of time and then the heating devices to be switched off.

2. The method of claim 1, wherein in the incubation phase via the sensors, the respective temperature of the unheated honeycomb carriers for breeding is detected, and in which after the determination over the entire extent or in partial areas of brood characteristic of given temperature values or temperature profiles, which indicate the coverage of brooding combs, the controlled and timed heat treatment to kill the Varroa mites in the brood combs takes place, whereby all brood-comb carriers undergoing the controlled and timed heat treatment simultaneously, or the heat-treatment is selectively limited only to those brooder-makers or areas of brood-cell carriers in which the characteristic temperature for capped hatching has been established.

3. Method according to one of the claims 1 or 2, wherein the controlled and timed heat treatment to kill the Varroa mite over predetermined periods of time in repetition, especially daily, weekly or monthly, takes place, and all the steps for the temperature detection, the initiation of heating, holding the target temperature, turning off the heaters and possibly the repetition of the heat treatment are performed automatically.

4. Method according to Claim 3, in which the automatically executed method steps and / or settings of relevant process parameters, such as time periods or temperature values, are triggered by remote control.

5. Beehive, with spatially separated in a housing arrangement housed flat honeycomb carriers for breeding, on the one hand, and honeycombs, on the other hand, and a device for reducing Varroa mites, in which this device comprises assigned to each honeycomb carrier for breed an electrical heater and assigned to each honeycomb carrier for breeding a variety in lattice-like arrangement over the entired area of the honeycomb carrier for breed distributed temperature sensors, and having a control and regulating device which processes the temperature signals and controls the energy supply to the heaters, in such a manner that the honeycomb carriers for breed are heated up to a target temperature in the honeycomb carriers for breed of the drone brood and the worker brood in which the Varroa mites reside and killed but the beehive is substantially unimpaired, are heatable, and the heating means after a predetermined time in which the target temperature is maintained, can be switched off, wherein
- the Control and regulating device can be switched on manually, and with the start of a sequence of controlled, timed heat treatment is started and automated executable, or
- the adjustability of the control and regulating device is provided in such a manner that after switching on the device a selectable cycle of, in particular daily, weekly or monthly, repetitive heat treatments to kill Varroa mites is automated executable.

6. Beehive according to claim 5, constructed as a magazine hive with at least one frame and frame arranged therein, in which middle walls are mounted as honeycomb carriers, whereby the central walls intended as honeycomb carriers for breeding
- are made of plastic, with formed honeycomb-like approaches on the surface, and the heaters in the plastic embedded heating conductors, in particular of copper, include, or
- are smooth, coated with wax plastic films, with heating conductors embedded in the films or applied to the plastic of the films, in particular made of copper, and the wax layer is applied with honeycomb structures applied therein.

7. Beehive according to claim 6, in which the heating devices for the middle walls provided as honeycomb carriers for breeding are divided into heating zones whose energy supply can be controlled independently of one another by means of the control and regulating device.

8. Beehive according to one of the claims 6 or 7, wherein the center walls are constructed in multiple layers, in such a manner that on an electrically insulating middle layer plastic layers on both sides follow, each associated with an electric heater and distributed in a grid-like arrangement over the surface temperature sensors.

9. Beehive according to claim 8, wherein the heating means and the temperature sensors are arranged on both sides of the insulating middle layer and the arrangement of middle layer, heaters and temperature sensors is coated on both sides with a lacquer layer.

10. Beehive according to one of the claims 6 to 9, wherein on an outer wall of one of the frames with juxtaposed honeycomb carriers for breeding a weatherproof receptacle for the heaters and the temperature sensors of the middle walls of the breeding super associated control and regulating device is arranged.

11. Beehive according to claim 10, wherein in the receptacle a battery device is housed as a power supply for the device formed with the heaters, the sensors and the control and regulating device.

12. Beehive according to one of the claims 10 or 11, with plug contacts to the frame and with a connectable to the control and regulating device contact chain made of plastic, which is formed from hingedly attached members which carry corresponding contacts with the plug contacts to the frame, in such a manner that by means of the contact chain placed over the frames their contacts with the plug contacts can be connected to the frame, for the production of all line connections between the control and regulating device, on the one hand, and the heating devices and sensors for the center walls connected in line with the plug contacts to the frame, on the other hand.

13. Beehive according to claim 12 as part of an arrangement of several hives of this type, wherein instead of the attached receptacle to an outer wall of the frame for the control and regulation a weather-protected connector is provided for establishing a line connection for this frame between the formed with heaters and temperature sensors center walls via plug contacts to the frame and a corresponding to claim 12 formed contact chain, on the one hand, and a central control and regulating device for all beehives of the arrangement, on the other hand.

14. Beehive according to one of the claims 6 to 13, with an electronic identification module on each frame with honeycomb carriers for breeding and on each frame of breeders in this frame.

15. Beehive according to claim 14, with readability of the identification features from the identification modules for storing these features together with further status and state data of the respective frame and the frame included in it by means of the control and regulating device designed therefor.

## Revendications

1. Procédé de réduction de la varroase dans une ruche constituée de supports de rayon essentiellement plans, logés de façon espacée les uns des autres dans une caisse et destinés à des rayons à couvain, d'une part, et des rayons à miel, d'autre part, selon lequel des dispositifs de chauffage électriques associés à chacun des supports de rayon à couvain chauffent les supports de rayon jusqu'à ce qu'une température cible soit atteinte dans les rayons des couvains de mâles et des couvains d'ouvrières, qui tue les varroas parasitant ceux-ci sans pour l'essentiel nuire au couvain, la température des supports de rayon étant mesurée pendant le chauffage par une pluralité de capteurs associés à chaque support de rayon à couvain et répartis sur l'ensemble du support de rayon selon une disposition en forme de grille, dont les signaux alimentent un dispositif de commande et de régulation qui assure une température cible essentiellement homogène sur chaque support de rayon pendant un temps défini, puis éteint les dispositifs de chauffage.

2. Procédé selon la revendication 1, selon lequel la température des supports de rayon à couvain non chauffés est mesurée par les capteurs pendant la phase de couvaison, et selon lequel après constatation de valeurs de température ou d'évolutions de température caractéristiques données sur toute l'étendue ou dans des parties des supports de rayon à couvain, qui permettent de conclure à l'operculation des rayons à couvain, les rayons à couvain sont soumis au traitement thermique régulé et temporisé destiné à tuer les varroas, tous les supports de rayon à couvain subissant en même temps le traitement thermique régulé et temporisé ou le traitement thermique étant limité de façon sélective aux supports de rayon à couvain ou aux zones des supports de rayon à couvain où a été relevée la température caractéristique indiquant que les rayons à couvain sont operculés.

3. Procédé selon la revendication 1 ou 2, selon lequel le traitement thermique régulé et temporisé destiné à tuer les varroas est réalisé sur des durées prédéfinies et répété notamment quotidiennement, hebdomadairement ou mensuellement, et toutes les étapes du procédé consistant à mesurer la température, à débuter le chauffage, à maintenir la température cible, à éteindre les dispositifs de chauffage et, le cas échéant, à répéter le traitement thermique sont automatisées.

4. Procédé selon la revendication 3, selon lequel les étapes du procédé exécutées de façon automatisée et/ou les réglages des principaux paramètres, tels que les durées ou les valeurs de température, sont respectivement déclenchées et effectués à distance.

5. Ruche comprenant des supports de rayon plans logés de façon espacée les uns des autres dans une caisse et destinés à des rayons à couvain, d'une part, et des rayons à miel, d'autre part, et un dispositif pour réduire la varroase, ledit dispositif comprenant un dispositif de chauffage électrique associé à chaque support de rayon à couvain et une pluralité de capteurs associés à chaque support de rayon à couvain et répartis sur l'ensemble du support à rayons selon une disposition en forme de grille et comprenant un dispositif de commande et de régulation qui traite les signaux de température et commande l'alimentation en énergie des dispositifs de chauffage de telle sorte que les supports de rayon à couvain puissent être chauffés jusqu'à ce qu'une température cible soit atteinte dans les rayons des couvains de mâles et des couvains d'ouvrières, qui tue les varroas parasitant ceux-ci sans pour l'essentiel nuire au couvain, et que les dispositifs de chauffage puissent s'éteindre après un temps défini pendant lequel la température cible est maintenue,
- le dispositif de commande et de régulation pouvant être mis en marche manuellement et, qu'une fois mis en marche, le traitement thermique régulé et temporisé pouvant être lancé et exécuté de façon automatisée, ou
- le dispositif de commande et de régulation pouvant être réglé de telle manière qu'après sa mise en marche, un cycle sélectionnable de traitements thermiques se répétant notamment de façon quotidienne, hebdomadaire ou mensuelle pour tuer les varroas peut être exécuté de façon automatisée.

6. Ruche selon la revendication 5, conçue sous la forme d'une ruche à hausses multiples comprenant au moins une hausse et des cadres placés dans cette dernière, dans lesquels sont fixées des parois médianes servant de support de rayon, les parois médianes prévues en tant que supports de rayon à couvain
- étant en matière plastique avec des amorces de rayon réalisées dans les surfaces, et les dispositifs de chauffage comprenant des conducteurs chauffants, notamment en cuivre, noyés dans la matière plastique, ou
- étant des feuilles en matière plastique lisses enduites de cire, avec des conducteurs chauffants, notamment en cuivre, noyés dans les feuilles ou fixés sur la matière plastique des feuilles, et la couche de cire étant réalisée avec une structure alvéolaire.

7. Ruche selon la revendication 6, dans laquelle les dispositifs de chauffage pour les parois médianes prévues en tant que support de rayon sont divisés en zones de chauffe dont l'alimentation en énergie peut être commandée indépendamment les unes des autres au moyen du dispositif de commande et de régulation.

8. Ruche selon la revendication 6 ou 7, dans laquelle les parois médianes présentent une structure multicouche telle qu'une couche centrale isolante électriquement est entourée par deux couches en matière plastique à chacune desquelles sont associés un dispositif de chauffage électrique et des capteurs de température répartis sur la surface selon une disposition en forme de grille.

9. Ruche selon la revendication 8, dans laquelle les dispositifs de chauffage et les capteurs de température sont disposés sur les deux faces de la couche centrale isolante, et l'ensemble constitué de la couche centrale, des dispositifs de chauffage et des capteurs de température est revêtu sur les deux faces d'une couche de vernis.

10. Ruche selon l'une des revendications 6 à 9, dans laquelle sur une paroi extérieure de l'une des hausses comprenant des supports de rayon à couvain rangés les uns à côté des autres est prévu un logement résistant aux intempéries pour le dispositif de commande et de régulation associé aux dispositifs de chauffage et aux capteurs de températures des parois médianes de la hausse à couvain.

11. Ruche selon la revendication 10, dans laquelle une batterie destinée à alimenter en électricité le dispositif formé par les dispositifs de chauffage, les capteurs et le dispositif de commande et de régulation est également prévue dans le logement.

12. Ruche selon la revendication 10 ou 11, comprenant des contacts femelles sur les cadres et une chaîne de contact en matière plastique pouvant être reliée au dispositif de commande et de régulation, qui est composée de maillons assemblés de manière articulée les uns avec les autres et portant des contacts correspondant aux contacts femelles sur les cadres, de telle sorte que les contacts de la chaîne de contact posée sur les cadres puissent être reliés aux contacts femelles présents sur les cadres afin d'établir toutes les connexions entre, d'une part, le dispositif de commande et de régulation et, d'autre part, les dispositifs de chauffage et les capteurs pour les parois médianes qui sont reliés aux contacts femelles présents sur les cadres.

13. Ruche selon la revendication 12, en tant que partie d'une disposition composée de plusieurs ruches de ce type, dans laquelle à la place du logement pour le dispositif de commande et de régulation fixé sur une paroi extérieure de la hausse concernée est prévu un dispositif de connexion résistant aux intempéries destiné à établir, via les contacts femelles présents sur les cadres et une chaîne de contact réalisée conformément à la revendication 12, une connexion pour cette hausse entre les parois médianes dotées de dispositifs de chauffage et de capteurs de température, d'une part, et un dispositif de commande et de régulation central pour toutes les ruches de la disposition, d'autre part.

14. Ruche selon l'une des revendications 6 à 13, comprenant un module électronique d'identification sur chaque hausse renfermant des supports de rayon à couvain et sur chaque cadre de support de rayon à couvain présent dans cette hausse.

15. Ruche selon la revendication 14, les caractéristiques d'identification des modules d'identification pouvant être lues afin de les enregistrer avec d'autres données d'état et de statut de la hausse concernée et des cadres qu'elle renferme au moyen du dispositif de commande et de régulation conçu à cet effet.
